# EUROPÄISCHE PATENTSCHRIFT

(11) **EP 4 139 709 B1**
(45) Veröffentlichungstag und Bekanntmachung des Hinweises auf die Patenterteilung: **15.10.2025**
(21) Anmeldenummer: 21716667.7
(22) Anmeldetag: 31.03.2021
(51) Int. Cl.: G01S 17/931, G01S 17/48, G01S 7/495, G01S 7/497

(54) **VERFAHREN UND VORRICHTUNG ZUM ERKENNEN VON BLOOMING IN EINER LIDARMESSUNG**
METHOD AND DEVICE FOR IDENTIFYING BLOOMING IN A LIDAR MEASUREMENT
PROCÉDÉ ET DISPOSITIF D'IDENTIFICATION DE L'EFFLORESCENCE DANS UNE MESURE LIDAR

(30) Priorität: 21.04.2020 DE 102020110809
(43) Veröffentlichungstag der Anmeldung: 01.03.2023
(73) Patentinhaber: Mercedes-Benz Group AG, 70372 Stuttgart (DE)
(72) Erfinder: MEINKE, Martin, 71157 Hildrizhausen (DE); PETER, David, 70195 Stuttgart (DE); BUCK, Sebastian, 70563 Stuttgart-Vaihingen (DE)
(74) Vertreter: Novagraaf Group
(86) Internationale Anmeldenummer: PCT/EP2021/058407
(87) Internationale Veröffentlichungsnummer: WO 2021/213788

(56) Entgegenhaltungen:
- EP-A1- 3 550 329
- US-A1- 2019 391 270

## Beschreibung

Die Erfindung betrifft ein Verfahren zum Erkennen von Blooming in einer Lidarmessung. Die Erfindung betrifft weiterhin eine Vorrichtung zum Erkennen von Blooming in einer Lidarmessung mit zumindest einem Lidar.

Aus der EP 3 555 329 A1 ist ein Verfahren und eine Vorrichtung zur Ermittlung eines Abstands zu einem Objekt mittels eines Lidars bekannt, wobei das Lidar eine Halbleiterlichtquelle, einen optischen Detektor und eine Verarbeitungseinheit umfasst. Mit der Halbleiterlichtquelle wird dabei eine periodische Folge von Laserimpulsen ausgesendet, um ein Lichtmuster auf das Objekt zu projizieren, das am Objekt zum Lidar reflektiert wird, mit dem Detektor wird das reflektierte Lichtmuster detektiert und mit der Verarbeitungseinheit wird aus dem detektierten Lichtmuster der Abstand zum Objekt ermittelt, wobei die Ermittlung des Abstands auf der Ermittlung einer Signallaufzeit der Laserimpulse beruht.

Aus der DE 10 2005 003 970 A1 ist ein Verfahren zur Bestimmung einer Funktionsfähigkeit einer Sensoranordnung an einem Kraftfahrzeug bekannt, wobei ein von der Sensoranordnung erfasster Bereich in verschiedene Unterbereiche unterteilt ist und einem Unterbereich zugeordnete Sensorsignale aus einem bestimmten Umgebungsbereich zur Bestimmung der Funktionsfähigkeit der Sensoranordnung ausgewertet werden. Dabei werden Sensorsignale ausgewertet, die nacheinander für verschiedene Unterbereiche bei einer Vorbeifahrt an dem bestimmten Umgebungsbereich erfasst werden. Bei den Unterbereichen handelt es sich um Erfassungsbereiche verschiedener Lidarsensoren oder um verschiedene Winkelsektoren eines Lidarsensors. Weiterhin ist aus der DE 10 2018 003 593 A1 ein Verfahren zum Betrieb eines Assistenzsystems eines Fahrzeugs bekannt, bei dem mittels des Assistenzsystems das Fahrzeug im autonomen Fahrbetrieb bewegt wird und das Assistenzsystem eine Umgebungssensorik mit einer Anzahl von im und/oder am Fahrzeug angeordneten Erfassungseinheiten umfasst. Mittels der Erfassungseinheiten werden im autonomen Fahrbetrieb des Fahrzeugs eine Umgebung des Fahrzeuges und sich in dieser befindende Objekte erfasst, wobei mittels eines Überwachungsmoduls eine Funktion der einzelnen Erfassungseinheiten fortlaufend überwacht wird und bei einem Ausfall einer Erfassungseinheit ausschließlich eine mit dieser ausgefallenen Erfassungseinheit verbundene Assistenzfunktion mittels eines mit dem Überwachungsmodul verbundenen Planungsmoduls deaktiviert wird. Die Erfassungseinheiten umfassen einen lidarbasierten Sensor.

Die US 2019/0391270 A1 beschreibt ein Reflexionssystem zur Verbesserung einer Umgebungsbeobachtung unter Verwendung eines Lidars in Gegenwart hochreflektierender Oberflächen. Das Reflexionssystem umfasst mehrere Prozessoren, einen Speicher, welcher mit den Prozessoren kommuniziert. Weiterhin umfasst das Reflexionssystem ein Scanmodul mit Anweisungen, die, wenn sie von den Prozessoren ausgeführt werden, dazu führen, dass die Prozessoren als Reaktion auf die Feststellung, dass eine erste Punktwolke eine Beobachtung eines verdeckenden Objekts enthält, das stark reflektiert, eine Aussendung eines Abtastlichtstrahls mit einer Abtastintensität steuern, die sich von einer Anfangsintensität eines Anfangslichtstrahls unterscheidet, der zum Erfassen der ersten Punktwolke verwendet wird, und das Lidar dynamisch steuern, um eine zweite Punktwolke zu erfassen, die das verdeckende Objekt ausspart. Ferner ist ein Ausgabemodul mit Anweisungen vorgesehen, die bei Ausführung durch die Prozessoren dazu führen, dass die Prozessoren aus der ersten Punktwolke und der zweiten Punktwolke eine zusammengesetzte Punktwolke erzeugen, die die Beobachtung der Umgebung unter Verwendung des Lidars durch Verringerung von Störungen durch das verdeckende Objekt verbessert.

Der Erfindung liegt die Aufgabe zu Grunde, ein neuartiges Verfahren und eine neuartige Vorrichtung zum Erkennen von Blooming in einer Lidarmessung anzugeben.

Die Aufgabe wird erfindungsgemäß gelöst durch ein Verfahren, welches die im Anspruch 1 angegebenen Merkmale aufweist, und durch eine Vorrichtung, welche die im Anspruch 7 angegebenen Merkmale aufweist.

Vorteilhafte Ausgestaltungen der Erfindung sind Gegenstand der Unteransprüche.

In dem Verfahren zum Erkennen von Blooming in einer Lidarmessung wird erfindungsgemäß ein Abstand zu einem Lidarreflexionspunkt in einer aktiven Messung und einer passiven Messung ermittelt, wobei ein erster Abstandswert in der aktiven Messung basierend auf einer Signallaufzeit eines Laserimpulses ermittelt wird und ein zweiter Abstandswert in der passiven Messung basierend auf einer Triangulation von aus unterschiedlichen Messpositionen durchgeführten zweidimensionalen Intensitätsmessungen ermittelt wird. Es wird dann auf Blooming geschlossen, wenn der zweite Abstandswert den ersten Abstandswert um ein vorgegebenes Maß überschreitet.

Dabei wird unter einer passiven Messung anhand von zweidimensionalen Intensitätsmessungen eine Erfassung einer Umgebung mittels zumindest eines Lidars verstanden, bei welcher das zumindest eine Lidar ohne aktive Aussendung von Laserstrahlung ausschließlich in der Umgebung vorhandene Lichtstrahlung erfasst.

Unter Blooming wird dabei vorliegend eine Überstrahlung oder ein Übersprechen in einer Lidarmessung verstanden. Das Blooming tritt beispielsweise auf, wenn ein von einem Lidar emittierter Laserpuls von einem stark reflektierenden Ziel, beispielsweise einem Verkehrszeichen oder einem Scheinwerferreflektor, reflektiert wird. In diesem Fall wird im Vergleich zu weniger reflektierenden Zielen eine große Menge von emittierter Energie an das Lidar zurückgesendet. Der dabei zurückgesendete Lichtstrahl ist normalerweise nicht optimal fokussiert. Die Gründe dafür sind vielfältig, häufig ist es so, dass die Reflexion vom Ziel normalerweise nicht optimal spiegelnd ist, Partikel in der Atmosphäre den Laserstrahl ablenken oder Verschmutzungen auf einer Abdeckung des Lidars eine Lichtstreuung verursachen. Dies kann dazu führen, dass zurückgesendetes Licht auf mehrere räumlich nah zueinander angeordnete Empfängerzellen des Lidars trifft bzw. das zurückgesendete Licht auf benachbarte Pixel übergeht. Daraus resultiert, dass - abhängig von einer Empfindlichkeit des Detektors - eine Entfernungsmessung ausgelöst wird. Bloomingeffekte sind dabei normalerweise bei kürzeren Entfernungen vom Lidar stärker, da die von einem Ziel reflektierte Energiemenge mit zunehmender Entfernung, die das Licht zurücklegen muss, schnell abnimmt.

Lidare spielen eine wichtige Rolle in Fahrerassistenzsystemen und anderen automatisiert betriebenen Plattformen, beispielsweise Robotern, da sie eine genaue dreidimensionale Darstellung einer Umgebung des Lidars ermöglichen. Beim Auftreten des Blooming kann es jedoch zu falschen Ergebnissen bei einer Messung von Entfernungen zwischen dem Lidar und in dessen Umgebung erfassten Objekten kommen. Insbesondere können aufgrund von Blooming-Effekten falsch-positive Lidarmessungen entstehen, so dass die genaue dreidimensionale Darstellung der Umgebung erschwert wird.

Mittels des Verfahrens ist in einfacher Weise eine zuverlässige Erkennung von Blooming in Lidarmessungen möglich, so dass falsche Ergebnisse in solchen Entfernungsmessungen vermieden oder zumindest sicher erkannt werden können. Hieraus resultiert ein sicherer Betrieb von Anwendungen, beispielsweise automatisiert, insbesondere hochautomatisiert oder autonom fahrenden oder bewegten Fahrzeugen und Robotern.

In einer möglichen Ausgestaltung des Verfahrens basiert die passive Messung auf zwei zweidimensionalen Intensitätsmessungen, wobei eine erste Intensitätsmessung mittels eines ersten Lidars durchgeführt wird und eine zweite Intensitätsmessung mittels eines an einer anderen Position als das das erste Lidar angeordneten zweiten Lidars durchgeführt wird. Dies ermöglicht eine einfache und zuverlässige Durchführung der passiven Messung und daraus folgend eine besonders zuverlässige Erkennung von Blooming.

In einer weiteren möglichen Ausgestaltung des Verfahrens werden die beiden zweidimensionalen Intensitätsmessungen gleichzeitig oder zeitlich nacheinander durchgeführt. Insbesondere bei gleichzeitig durchgeführten Intensitätsmessungen kann die passive Messung des Abstands sehr schnell durchgeführt werden.

In einer weiteren möglichen Ausgestaltung des Verfahrens basiert die passive Messung auf zwei zweidimensionalen Intensitätsmessungen, wobei eine erste Intensitätsmessung mittels eines in einer ersten Position befindlichen Lidars durchgeführt wird und eine zweite Intensitätsmessung mittels des gleichen Lidars zeitlich nach der ersten Messung und in einer von der ersten Position abweichenden zweiten Position durchgeführt wird. Dies ermöglicht eine einfache und zuverlässige Durchführung der passiven Messung und daraus folgend eine besonders zuverlässige Erkennung von Blooming, wobei lediglich ein Lidar zur Durchführung der zweidimensionalen Intensitätsmessungen erforderlich ist, was zu einem besonders geringen Hardware- und Kosteneinsatz führt.

In einer weiteren möglichen Ausgestaltung des Verfahrens wird die passive Messung durch Auswertung von in den zwei zweidimensionalen Intensitätsmessungen erfassten zweidimensionalen Intensitätsbildern mittels eines stereoskopischen Verfahrens durchgeführt. Solche stereoskopischen Verfahren ermitteln zuverlässig den Abstand zu einem Lidarreflexionspunkt und somit zu einem Objekt in der Umgebung des Lidars.

In einer weiteren möglichen Ausgestaltung des Verfahrens wird als stereoskopisches Verfahren ein Semi-Global-Matching-Algorithmus verwendet, mittels welchem die Ermittlung des Abstands zu einem Pixel in den zweidimensionalen Intensitätsbildern und somit zu einem Objekt in der Umgebung des Lidars sehr zuverlässig und besonders exakt durchführbar ist.

Die Vorrichtung zum Erkennen von Blooming in einer Lidarmessung umfasst zumindest ein Lidar und ist erfindungsgemäß durch eine Verarbeitungseinheit gekennzeichnet, welche ausgebildet ist, einen Abstand des zumindest einen Lidars zu einem Lidarreflexionspunkt in einer aktiven Messung und einer passiven Messung zu ermitteln, wobei die passive Messung eine Messung ist, bei der anhand von zweidimensionalen Intensitätsmessungen eine Umgebung mittels des zumindest einen Lidars erfasst wird, wobei das zumindest eine Lidar eingerichtet ist, bei der passiven Messung ohne aktive Aussendung von Laserstrahlung ausschließlich in der Umgebung vorhandene Lichtstrahlung zu erfassen. Die Verarbeitungseinheit ist weiterhin ausgebildet, einen ersten Abstandswert in der aktiven Messung basierend auf einer Signallaufzeit eines Laserimpulses zu ermitteln, einen zweiten Abstandswert in der passiven Messung basierend auf einer Triangulation von aus unterschiedlichen Messpositionen durchgeführten zweidimensionalen Intensitätsmessungen zu ermitteln und dann auf Blooming zu schließen, wenn der zweite Abstandswert den ersten Abstandswert um ein vorgegebenes Maß überschreitet.

Mittels der Vorrichtung ist in einfacher Weise eine zuverlässige Erkennung von Blooming in Lidarmessungen möglich, so dass falsche Ergebnisse in mittels eines Lidars durchgeführten Entfernungsmessungen vermieden oder zumindest sicher erkannt werden können. Hieraus resultiert ein sicherer Betrieb von Anwendungen, beispielsweise automatisiert, insbesondere hochautomatisiert oder autonom fahrenden oder bewegten Fahrzeugen und Robotern.

Ausführungsbeispiele der Erfindung werden im Folgenden anhand von Zeichnungen näher erläutert.

Dabei zeigen:
- Fig. 1: schematisch eine Anordnung eines Lidars und eine von dem Lidar überwachte Umgebung,
- Fig. 2: schematisch eine Anordnung eines Lidars zu unterschiedlichen Zeitpunkten und eine von dem Lidar überwachten Umgebung,
- Fig. 3: schematisch ein mittels des Lidars gemäß Figur 2 zu einem ersten Zeitpunkt erfasstes Lidarbild,
- Fig. 4: schematisch ein mittels des Lidars gemäß Figur 2 zu einem zweiten Zeitpunkt erfasstes Lidarbild,
- Fig. 5: schematisch eine Anordnung von zwei Lidaren und eine von den Lidaren überwachte Umgebung,
- Fig. 6: schematisch ein mittels eines ersten Lidars gemäß Figur 5 erfasstes Lidarbild und
- Fig. 7: schematisch ein mittels eines zweiten Lidars gemäß Figur 5 erfasstes Lidarbild.

Einander entsprechende Teile sind in allen Figuren mit den gleichen Bezugszeichen versehen.

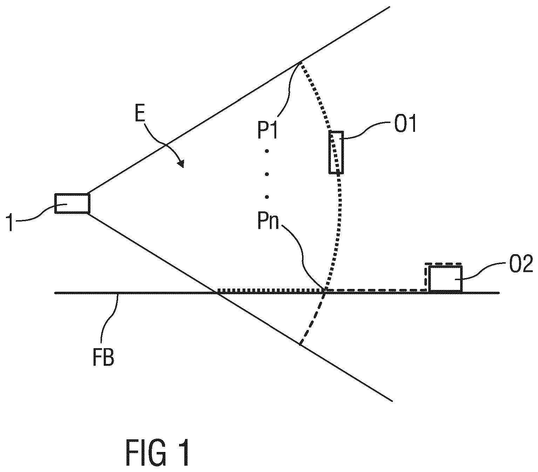

In Figur 1 ist eine Anordnung eines Lidars 1 und eine von dem Lidar 1 überwachte Umgebung dargestellt.

Innerhalb der Umgebung des Lidars 1 befinden sich zwei Objekte O1, O2, welche vom Lidar 1 innerhalb eines Erfassungsbereichs E erfasst werden.

Das Lidar 1 ist beispielsweise an einem automatisiert, insbesondere hochautomatisiert oder autonom fahrenden Fahrzeug angeordnet. Das Lidar 1 kann alternativ auch an einem Roboter angeordnet sein.

Bei dem ersten Objekt O1 handelt es sich um ein hochreflektives Objekt O1, beispielsweise ein Verkehrszeichen, zum Beispiel ein oberhalb einer Fahrbahn FB angeordnetes Autobahnschild. Das zweite Objekt O2 befindet sich auf der Fahrbahn und weist eine beliebige Reflektivität, beispielsweise auch eine geringere oder größere Reflektivität als das erste Objekt O1, auf.

Mittels des Lidars 1 werden Entfernungen zu Objekten O1, O2 in dessen Umgebung ermittelt, indem Laserpulse ausgesendet werden und eine Zeit erfasst wird, bis ein reflektierter Laserpuls auf einen Empfänger des Lidars 1 trifft. Dabei kann der Lidar 1 mehrere Laser und/oder mehrere Empfänger umfassen, um eine Messrate und eine räumliche Auflösung des Lidars 1 zu erhöhen. Dabei kann eine mittels des Lidars 1 ausgeführte Messung, auch als Scan bezeichnet, derart ausgeführt werden, dass ein vollständiger Scan als zweidimensionales Messraster, auch als Lidarbild bezeichnet, interpretiert werden kann.

In der dargestellten Umgebung des Lidars 1 erzeugt das erste Objekt O1 aufgrund seiner hohen Reflektivität während der Lasermessung Blooming-Punkte P1 bis Pn über- und unterhalb des Objekts O1 in gleicher Entfernung, so dass ein so genanntes Blooming-Artefakt entsteht. Falls diese Blooming-Punkte P1 bis Pn nicht als solche detektiert werden, besteht die Gefahr, dass in einer weitergehenden Datenverarbeitung, beispielsweise einer Sensor-Fusion, davon ausgegangen wird, dass sich dort ein Hindernis, beispielsweise ein Stau-Ende befindet, so dass von einem Fahrerassistenzsystem gegebenenfalls eine ungewollte Bremsung ausgelöst wird.

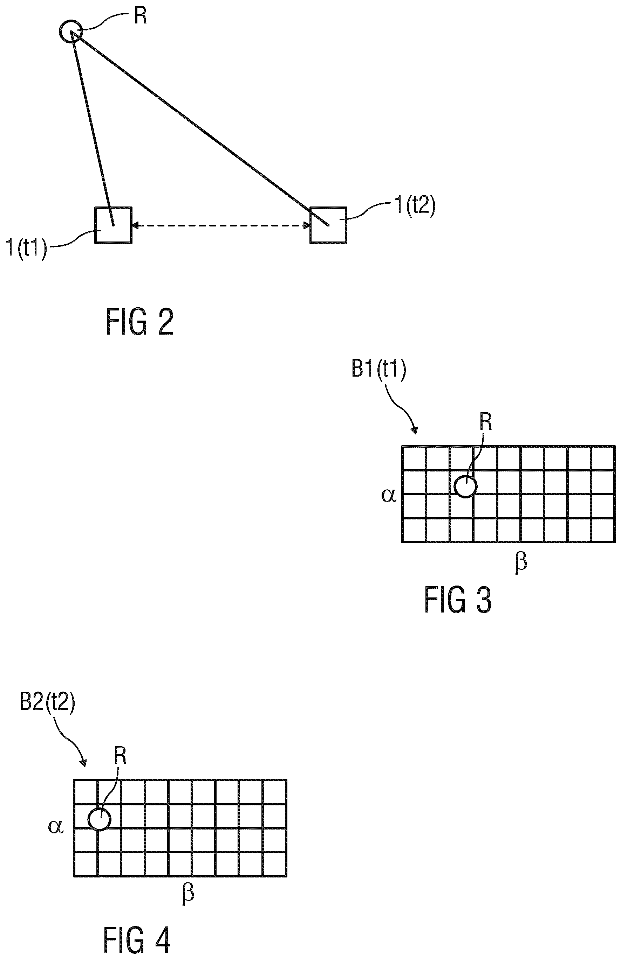

Figur 2 zeigt eine Anordnung eines Lidars 1 zu unterschiedlichen Zeitpunkten t1, t2 und eine von dem Lidar 1 überwachte Umgebung. In Figur 3 ist ein mittels des Lidars 1 gemäß Figur 2 zu einem ersten Zeitpunkt t1 erfasstes Lidarbild B1 und in Figur 4 ein mittels des Lidars 1 gemäß Figur 2 zu einem auf den ersten Zeitpunkt t1 folgenden zweiten Zeitpunkt t2 erfasstes Lidarbild B2 dargestellt. Die Lidarbilder B1, B2 stellen dabei jeweils ein zweidimensionales Messraster bzw. ein zweidimensionales Intensitätsbild dar, dessen Achsen Werte eines vertikalen Winkels α und Werte eines horizontalen Winkels β abbilden, so dass der vertikale Winkel α und der horizontale Winkel β Bildkoordinaten bilden.

Das Lidar 1 ist an einer sich bewegenden Plattform, beispielsweise an einem automatisiert, insbesondere hochautomatisiert oder autonom fahrenden oder bewegten Fahrzeug oder Roboter angeordnet.

Wie bereits beschrieben, werden mittels des Lidars 1 Entfernungen zu Objekten O1, O2 in dessen Umgebung ermittelt, indem Laserpulse ausgesendet werden und eine Zeit erfasst wird, bis ein reflektierter Laserpuls auf einen Empfänger des Lidars 1 trifft. Die Reflexion wird dabei an einem Lidarreflexionspunkt R erzeugt, welcher zu dem jeweiligen Objekt O1, O2, beispielsweise einer so genannten Landmarke, gehört.

Lidare 1 werden normalerweise als aktive Sensoren betrachtet, da sie gemäß obiger Beschreibung aktiv Energie aussenden müssen, um eine Laufzeitmessung, auch als Time-of-Flight-Messung bezeichnet, durchzuführen. Ist der Empfänger des Lidars 1 empfindlich genug, kann dieser auch verwendet werden, um eine Intensität von Umgebungslicht bei einer angegebenen Wellenlänge des Lidars 1 zu messen, das ohne aktive Beleuchtung zum Lidar 1 zurückgestreut wird. Dadurch ist es möglich, mittels des Lidars 1 in einer passiven zweidimensionalen Intensitätsmessung ein hochdynamisches Graustufenbild einer Szene zu erzeugen. Aufgrund einer deutlich geringeren Intensität von passiv reflektiertem Licht treten bei derartigen passiven Messungen keine BloomingEffekte auf. Solche passiven Messungen können dabei unmittelbar vor oder unmittelbar nach der aktiven Messung durchgeführt werden, so dass eine aufgenommene Szene zwischen beiden Messungen fast keine Änderung zeigt. Während die aktive Messung eine genaue dreidimensionale Darstellung der Umgebung des Lidars 1 liefert, ermöglicht die passive Messung einen hohen Detaillierungsgrad für ein zweidimensionales Erscheinungsbild eines Objekt O1, O2. Somit können sich beide Messprinzipien ergänzen.

Das dargestellte und an der sich bewegenden Plattform angeordnete Lidar 1 ist sowohl zur Ausführung einer aktiven Messung von Entfernungen zum Lidarreflexionspunkt R als auch zur Ausführung einer passiven Messung von Intensitäten ausgebildet. Die passive Messung kann dabei unmittelbar vor oder unmittelbar nach der aktiven Messung durchgeführt werden.

Zur Ermittlung von Blooming in einer Lidarmessung wird anhand von mittels des Lidars 1 erfassten Daten ein Abstand zu dem Lidarreflexionspunkt R in einer aktiven Messung und einer passiven Messung ermittelt, indem ein erster Abstandswert in der aktiven Messung basierend auf einer Signallaufzeit eines Laserimpulses vom Lidar 1 zum Lidarreflexionspunkt R und wieder zurück zum Lidar 1 ermittelt wird.

Anschließend wird ein zweiter Abstandswert in der passiven Messung basierend auf einer Triangulation von aus unterschiedlichen Messpositionen durchgeführten zweidimensionalen Intensitätsmessungen ermittelt.

Es wird dann auf Blooming geschlossen, wenn der zweite Abstandswert den ersten Abstandswert um ein vorgegebenes Maß überschreitet, insbesondere signifikant größer ist als der erste Abstandswert.

Dabei basiert die passive Messung auf zwei zweidimensionalen Intensitätsmessungen, wobei eine erste Intensitätsmessung mittels des zu dem ersten Zeitpunkt t1 in einer ersten Position befindlichen Lidars 1 durchgeführt wird und eine zweite Intensitätsmessung mittels des gleichen Lidars 1 zeitlich nach der ersten Messung zu dem zweiten Zeitpunkt t2 und in einer von der ersten Position abweichenden zweiten Position durchgeführt wird. Zwischen den beiden Zeitpunkten t1, t2 verändert sich eine relative Position des Lidars 1 zu dem Lidarreflexionspunkt R aufgrund der Bewegung der Plattform.

Eine Bewegung des Lidars 1 zwischen zwei Messungen ist dabei beispielsweise durch Auswertung einer Inertial-Messeinheit bekannt, welche ebenfalls an der beweglichen Plattform angeordnet ist und zu dem Lidar 1 oder einem gemeinsamen Bezugssystem kalibriert ist.

Eine Beobachtung charakteristischer Positionen, beispielsweise von Landmarken, in einem Lidarbild B1, B2 aus verschiedenen Blickwinkeln ermöglicht eine Durchführung einer dreidimensionalen Rekonstruktion einer beobachteten Szene. Aufgrund der Bewegung des Lidars 1 können charakteristische Positionen und somit ein zugehöriger Lidarreflexionspunkt R oder ein diesen repräsentierendes, in einem zweidimensionales Intensitätsbild erfasstes Pixel an anderen Positionen in den Lidarbildern B1, B2 erscheinen, die von anderen Umgebungspositionen aus aufgenommen wurden. Dieser Effekt wird im Allgemeinen als Bewegungsparallaxe bezeichnet. Wenn die Bewegung des Lidars 1 zwischen den zwei Zeitpunkten t1, t2 bekannt ist und eine Position ein und desselben Lidarreflexionspunkts R in beiden Lidarbildern B1, B2 gefunden wird, kann eine dreidimensionale Position und somit ein Abstand zu dem Lidarreflexionspunkt R durch einfache Triangulation rekonstruiert werden.

Beispielsweise wird die passive Messung durch Auswertung der zwei zweidimensionalen Intensitätsmessungen mittels eines stereoskopischen Verfahrens, beispielsweise eines Semi-Global-Matching-Algorithmus, durchgeführt.

Ein mögliches Ausführungsbeispiel eines Verfahrens zum Erkennen von Blooming in einer Lidarmessung wird im Folgenden beschrieben.

Zunächst wird ein allgemein bekannter Stereo-Matching-Algorithmus, beispielsweise ein Semi-Global-Matching-Algorithmus, verwendet, um eine Winkelverschiebung zwischen jedem Pixel in den passiven und aus zwei verschiedenen Perspektiven erfassten Lidarbildern B1, B2 zu ermitteln. Beispielsweise sieht das Lidar 1 zum Zeitpunkt t1 den Lidarreflexionspunkt R oder ein diesen repräsentierendes Pixel in einem vertikalen Winkel α von 10 Grad und einem horizontalen Winkel β von 5 Grad. Zum Zeitpunkt t2 sieht das Lidar 1 den Lidarreflexionspunkt R oder das diesen repräsentierende Pixel in einem vertikalen Winkel α von 10 Grad und einem horizontalen Winkel β von 20 Grad.

Da eine dreidimensionale Bewegung des Lidars 1 zwischen der Erfassung beider Lidarbilder B1, B2 bekannt ist, können Informationen über die entsprechenden Positionswinkel aus der ersten und zweiten Messung verwendet werden, um dreidimensionale Koordinaten der gemessenen Pixelposition, das heißt des Lidarreflexionspunkts R, zu triangulieren.

Ein Vergleich der aktiven Messung an einem beliebigen Pixelort mit der passiven Messung, die durch die beschriebene Triangulation abgeleitet wurde, ermöglicht nun Rückschlüsse auf das Vorhandensein von Blooming. Wenn die mit dem Structure-From-Motion-Algorithmus abgeleitete passive Messung einen deutlich größeren Abstand als die aktive Messung ergibt, kann als plausible Erklärung hierfür auf Blooming geschlossen werden.

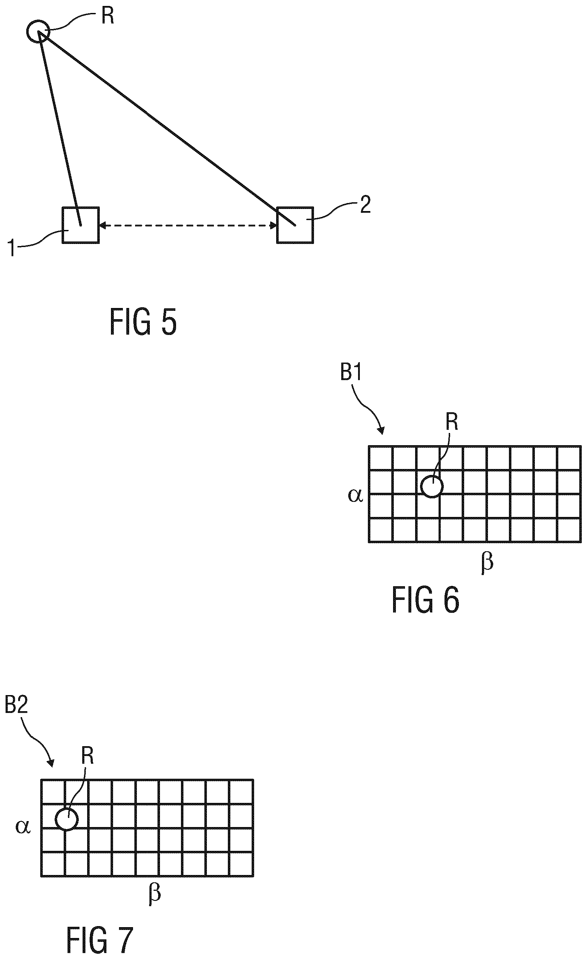

Figur 5 zeigt eine Anordnung eine Anordnung von zwei Lidaren 1, 2 und eine von den Lidaren 1, 2 überwachte Umgebung. In Figur 6 ist ein mittels eines Lidars 1 gemäß Figur 5 erfasstes Lidarbild B1 und in Figur 7 ein mittels des anderen Lidars 2 gemäß zur gleichen Zeit erfasstes Lidarbild B2 dargestellt. Die Lidarbilder B1, B2 stellen dabei jeweils ein zweidimensionales Messraster bzw. ein zweidimensionales Intensitätsbild dar, dessen Achsen Werte eines vertikalen Winkels α und Werte eines horizontalen Winkels β abbilden, so dass der vertikale Winkel α und der horizontale Winkel β Bildkoordinaten bilden.

Beide Lidare 1, 2 sind an einer sich bewegenden Plattform, beispielsweise an einem automatisiert, insbesondere hochautomatisiert oder autonom fahrenden oder bewegten Fahrzeug oder Roboter angeordnet. Die Lidare 1, 2 sind dabei zeitlich synchronisiert, so dass diese ausgebildet sind, gleichzeitig gleichartige räumliche Winkel zu erfassen.

Beide Lidare 1, 2 sind sowohl zur Ausführung einer aktiven Messung von Entfernungen zum Lidarreflexionspunkt R als auch zur Ausführung einer passiven Messung von Intensitäten ausgebildet. Die passive Messung kann dabei unmittelbar vor oder unmittelbar nach der aktiven Messung durchgeführt werden.

Zur Ermittlung von Blooming in einer Lidarmessung wird in diesem Ausführungsbeispiel anhand von mittels der Lidare 1, 2 erfassten Daten ein Abstand zu dem Lidarreflexionspunkt R in einer aktiven Messung und einer passiven Messung ermittelt, indem ein erster Abstandswert in der aktiven Messung basierend auf einer Signallaufzeit eines Laserimpulses vom Lidar 1 und/oder vom Lidar 2 zum Lidarreflexionspunkt R und wieder zurück zum Lidar 1 und/oder Lidar 2 ermittelt wird.

Anschließend wird ein zweiter Abstandswert in der passiven Messung basierend auf einer Triangulation von aus unterschiedlichen Messpositionen durchgeführten zweidimensionalen Intensitätsmessungen ermittelt.

Es wird dann auf Blooming geschlossen, wenn der zweite Abstandswert den ersten Abstandswert um ein vorgegebenes Maß überschreitet, insbesondere signifikant größer ist als der erste Abstandswert.

Extrinsische Parameter der Lidare 1, 2, das heißt deren Position und/oder Ausrichtung, sind bekannt. Hierzu sind die Lidare 1, 2 in Bezug aufeinander oder auf ein gemeinsames Bezugssystem kalibriert.

Dies erlaubt, im Gegensatz zu dem zuvor in Bezug auf die Figuren 2 bis 4 beschriebenen Ausführungsbeispiel, dass die passive Messung auf zwei zweidimensionalen Intensitätsmessungen basiert, wobei eine erste Intensitätsmessung mittels des ersten Lidars 1 durchgeführt wird und die zweite Intensitätsmessung mittels des an einer anderen Position als das das erste Lidar 1 angeordneten zweiten Lidars 2 durchgeführt wird.

Die gleichzeitige Erfassung der Szene aus unterschiedlichen Blickwinkeln mittels der Lidare 1, 2 ermöglicht eine Beobachtung charakteristischer Positionen, beispielsweise von Landmarken, in den Lidarbildern B1, B2 aus den verschiedenen Blickwinkeln und somit eine Durchführung einer dreidimensionalen Rekonstruktion der beobachteten Szene. Aufgrund der unterschiedlichen Positionen der Lidare 1, 2 können charakteristische Positionen und somit ein zugehöriger Lidarreflexionspunkt R oder ein diesen repräsentierendes Pixel an anderen Positionen in den Lidarbildern B1, B2 erscheinen, die von anderen Umgebungspositionen aus aufgenommen wurden. Da die relative Position der Lidare 1, 2 zueinander und deren extrinsische Parameter bekannt sind, kann dann, wenn eine Position ein und desselben Lidarreflexionspunkts R oder des diesen repräsentierenden Pixels in beiden Lidarbildern B1, B2 gefunden wird, eine dreidimensionale Position und somit ein Abstand zu dem Lidarreflexionspunkt R durch einfache Triangulation rekonstruiert werden.

Beispielsweise wird die passive Messung durch Auswertung der zwei Intensitätsmessungen mittels eines stereoskopischen Verfahrens, beispielsweise eines Semi-Global-Matching-Algorithmus, durchgeführt.

Ein mögliches Ausführungsbeispiel eines Verfahrens zum Erkennen von Blooming in einer Lidarmessung wird im Folgenden beschrieben.

Zunächst wird ein allgemein bekannter Stereo-Matching-Algorithmus, beispielsweise ein Semi-Global-Matching-Algorithmus, verwendet, um eine Winkelverschiebung zwischen jedem Pixel in den passiven und aus zwei verschiedenen Perspektiven erfassten Lidarbildern B1, B2 zu ermitteln. Beispielsweise sieht das Lidar 1 den Lidarreflexionspunkt R oder ein diesen repräsentierendes Pixel in einem vertikalen Winkel α von 10 Grad und einem horizontalen Winkel β von 5 Grad. Das Lidar 1 sieht den Lidarreflexionspunkt R oder das diesen repräsentierende Pixel zur gleichen Zeit beispielsweise in einem vertikalen Winkel α von 10 Grad und einem horizontalen Winkel β von 20 Grad.

Da eine Transformation zwischen Koordinatensystemen beider Lidare 1, 2 bekannt ist, können Informationen über die entsprechenden Positionswinkel den mittels der Lidare 1, 2 durchgeführten passiven Intensitätsmessungen verwendet werden, um dreidimensionale Koordinaten der gemessenen Pixelposition, das heißt des Lidarreflexionspunkts R, zu triangulieren.

Ein Vergleich der aktiven Messung an einem beliebigen Pixelort mit der passiven Messung, die durch die beschriebene Triangulation abgeleitet wurde, ermöglicht nun Rückschlüsse auf das Vorhandensein von Blooming. Wenn die passive Messung einen deutlich größeren Abstand als die aktive Messung ergibt, kann als plausible Erklärung hierfür auf Blooming geschlossen werden.

### Bezugszeichenliste

- 1: Lidar
- 2: Lidar

- B1: Lidarbild
- B2: Lidarbild
- E: Erfassungsbereich
- FB: Fahrbahn
- O1: Objekt
- O2: Objekt
- P1 bis Pn: Blooming-Punkt
- R: Lidarreflexionspunkt
- t1: Zeitpunkt
- t2: Zeitpunkt

- **α**: Winkel
- **β**: Winkel

## Patentansprüche

1. Verfahren zum Erkennen von Blooming in einer Lidarmessung,
**dadurch gekennzeichnet, dass**
- ein Abstand zu einem Lidarreflexionspunkt (R) in einer aktiven Messung und einer passiven Messung ermittelt wird, wobei die passive Messung eine Messung ist, bei der anhand von zweidimensionalen Intensitätsmessungen eine Umgebung mittels zumindest eines Lidars (1, 2) erfasst wird, wobei das zumindest eine Lidar (1, 2) bei der passiven Messung ohne aktive Aussendung von Laserstrahlung ausschließlich in der Umgebung vorhandene Lichtstrahlung erfasst,
- ein erster Abstandswert in der aktiven Messung basierend auf einer Signallaufzeit eines Laserimpulses ermittelt wird,
- ein zweiter Abstandswert in der passiven Messung basierend auf einer Triangulation von aus unterschiedlichen Messpositionen durchgeführten zweidimensionalen Intensitätsmessungen ermittelt wird und
- dann auf Blooming geschlossen wird, wenn der zweite Abstandswert den ersten Abstandswert um ein vorgegebenes Maß überschreitet.

2. Verfahren nach Anspruch 1,
**dadurch gekennzeichnet, dass**
- die passive Messung auf zwei zweidimensionalen Intensitätsmessungen basiert,
- eine erste Intensitätsmessung mittels eines ersten Lidars (1) durchgeführt wird und
- eine zweite Intensitätsmessung mittels eines an einer anderen Position als das das erste Lidar (1) angeordneten zweiten Lidars (2) durchgeführt wird.

3. Verfahren nach Anspruch 2,
**dadurch gekennzeichnet, dass** die beiden zweidimensionalen Intensitätsmessungen gleichzeitig oder zeitlich nacheinander durchgeführt werden.

4. Verfahren nach Anspruch 1,
**dadurch gekennzeichnet, dass**
- die passive Messung auf zwei zweidimensionalen Intensitätsmessungen basiert,
- eine erste Intensitätsmessung mittels eines in einer ersten Position befindlichen Lidars (1) durchgeführt wird und
- eine zweite Intensitätsmessung mittels des gleichen Lidars (1) zeitlich nach der ersten Messung und in einer von der ersten Position abweichenden zweiten Position durchgeführt wird.

5. Verfahren nach einem Ansprüche 2 bis 4,
**dadurch gekennzeichnet, dass** die passive Messung durch Auswertung von in den zwei zweidimensionalen Intensitätsmessungen erfassten zweidimensionalen Intensitätsbildern mittels eines stereoskopischen Verfahrens durchgeführt wird.

6. Verfahren nach einem Ansprüche 2 bis 4,
**dadurch gekennzeichnet, dass** als stereoskopisches Verfahren ein Semi-Global-Matching-Algorithmus verwendet wird.

7. Vorrichtung zum Erkennen von Blooming in einer Lidarmessung mit zumindest einem Lidar (1, 2),
**gekennzeichnet durch** eine Verarbeitungseinheit, welche ausgebildet ist,
- einen Abstand des zumindest einen Lidars (1, 2) zu einem Lidarreflexionspunkt (R) in einer aktiven Messung und einer passiven Messung zu ermitteln, wobei die passive Messung eine Messung ist, bei der anhand von zweidimensionalen Intensitätsmessungen eine Umgebung mittels des zumindest einen Lidars (1, 2) erfasst wird, wobei das zumindest eine Lidar (1, 2) eingerichtet ist, bei der passiven Messung ohne aktive Aussendung von Laserstrahlung ausschließlich in der Umgebung vorhandene Lichtstrahlung zu erfassen,
- einen ersten Abstandswert in der aktiven Messung basierend auf einer Signallaufzeit eines Laserimpulses zu ermitteln,
- einen zweiten Abstandswert in der passiven Messung basierend auf einer Triangulation von aus unterschiedlichen Messpositionen durchgeführten zweidimensionalen Intensitätsmessungen zu ermitteln und
- dann auf Blooming zu schließen, wenn der zweite Abstandswert den ersten Abstandswert um ein vorgegebenes Maß überschreitet.

## Claims

1. Method for detecting blooming in a lidar measurement,
**characterized in that**
- a distance to a lidar reflection point (R) is determined in an active measurement and a passive measurement, the passive measurement being a measurement in which an environment is detected by means of at least one lidar (1, 2) on the basis of two-dimensional intensity measurements, the at least one lidar (1, 2) detecting, during the passive measurement, without actively emitting laser radiation, only light radiation present in the environment,
- a first distance value is determined in the active measurement based on a signal propagation time of a laser pulse,
- a second distance value is determined in the passive measurement based on a triangulation of two-dimensional intensity measurements carried out from different measuring positions and
- it is then concluded that blooming has occurred if the second distance value exceeds the first distance value by a specified amount.

2. Method according to claim 1,
**characterized in that**
- the passive measurement is based on two two-dimensional intensity measurements,
- a first intensity measurement is carried out by means of a first lidar (1) and
- a second intensity measurement is carried out by means of a second lidar (2) arranged at a different position than the first lidar (1).

3. Method according to claim 2,
**characterized in that** the two two-dimensional intensity measurements are carried out simultaneously or sequentially.

4. Method according to claim 1,
**characterized in that**
- the passive measurement is based on two two-dimensional intensity measurements,
- a first intensity measurement is carried out by means of a lidar (1) located in a first position and
- a second intensity measurement is carried out by means of the same lidar (1) after the first measurement and in a second position different from the first position.

5. Method according to any of claims 2 to 4,
**characterized in that** the passive measurement is carried out by evaluating two-dimensional intensity images using a stereoscopic method, which two-dimensional intensity images were captured in the two two-dimensional intensity measurements.

6. Method according to any of claims 2 to 4,
**characterized in that** a semi-global matching algorithm is used as the stereoscopic method.

7. Device for detecting blooming in a lidar measurement comprising at least one lidar (1, 2),
**characterized by** a processing unit which is designed
- to determine a distance of the at least one lidar (1, 2) to a lidar reflection point (R) in an active measurement and a passive measurement, the passive measurement being a measurement in which an environment is detected by means of the at least one lidar (1, 2) on the basis of two-dimensional intensity measurements, the at least one lidar (1, 2) being configured to detect, during the passive measurement, without actively emitting laser radiation, only light radiation present in the environment,
- to determine a first distance value in the active measurement based on a signal propagation time of a laser pulse,
- to determine a second distance value in the passive measurement based on a triangulation of two-dimensional intensity measurements carried out from different measuring positions and
- to then conclude that blooming has occurred if the second distance value exceeds the first distance value by a specified amount.

## Revendications

1. Procédé de reconnaissance d'éblouissement dans une mesure de lidar,
**caractérisé en ce que**
- une distance par rapport à un point de réflexion lidar (R) est déterminée dans une mesure active et une mesure passive, dans lequel la mesure passive est une mesure dans laquelle un environnement est détecté à l'aide de mesures d'intensité bidimensionnelles par le biais d'au moins un lidar (1, 2), dans lequel l'au moins un lidar (1, 2) détecte exclusivement un rayonnement lumineux présent dans l'environnement lors de la mesure passive sans émission active de rayonnement laser,
- une première valeur de distance est déterminée dans la mesure active sur la base d'un temps de propagation de signal d'une impulsion laser,
- une seconde valeur de distance est déterminée dans la mesure passive sur la base d'une triangulation de mesures d'intensité bidimensionnelles réalisées à partir de différentes positions de mesure, et
- l'éblouissement est conclu lorsque la seconde valeur de distance dépasse la première valeur de distance d'une quantité prédéfinie.

2. Procédé selon la revendication 1,
**caractérisé en ce que**
- la mesure passive est basée sur deux mesures d'intensité bidimensionnelles,
- une première mesure d'intensité est réalisée par le biais d'un premier lidar (1), et
- une seconde mesure d'intensité est réalisée par le biais d'un second lidar (2) agencé à une position différente de celle du premier lidar (1).

3. Procédé selon la revendication 2,
**caractérisé en ce que** les deux mesures d'intensité bidimensionnelles sont réalisées simultanément ou successivement dans le temps.

4. Procédé selon la revendication 1,
**caractérisé en ce que**
- la mesure passive est basée sur deux mesures d'intensité bidimensionnelles,
- une première mesure d'intensité est réalisée par le biais d'un lidar (1) se trouvant dans une première position, et
- une seconde mesure d'intensité est réalisée par le biais du même lidar (1) dans le temps après la première mesure et dans une seconde position différente de la première position.

5. Procédé selon l'une des revendications 2 à 4,
**caractérisé en ce que** la mesure passive est réalisée en évaluant des images d'intensité bidimensionnelles détectées dans les deux mesures d'intensité bidimensionnelles par le biais d'un procédé stéréoscopique.

6. Procédé selon l'une des revendications 2 à 4,
**caractérisé en ce qu'**un algorithme de correspondance semi-globale est utilisé comme procédé stéréoscopique.

7. Dispositif de reconnaissance d'éblouissement dans une mesure de lidar comportant au moins un lidar (1, 2),
**caractérisé par** une unité de traitement qui est conçue,
- pour déterminer une distance de l'au moins un lidar (1, 2) par rapport à un point de réflexion lidar (R) dans une mesure active et une mesure passive, dans lequel la mesure passive est une mesure dans laquelle un environnement est détecté à l'aide de mesures d'intensité bidimensionnelles par le biais de l'au moins un lidar (1, 2), dans lequel l'au moins un lidar (1, 2) est destiné à détecter, lors de la mesure passive sans émission active de rayonnement laser, exclusivement un rayonnement lumineux présent dans l'environnement,
- pour déterminer une première valeur de distance dans la mesure active sur la base d'un temps de propagation de signal d'une impulsion laser,
- pour déterminer une seconde valeur de distance dans la mesure passive sur la base d'une triangulation de mesures d'intensité bidimensionnelles réalisées à partir de différentes positions de mesure, et
- pour conclure à l'éblouissement lorsque la seconde valeur de distance dépasse la première valeur de distance d'une quantité prédéfinie.
